# EUROPÄISCHE PATENTANMELDUNG

(11) **EP 1 362 875 A1**
(43) Veröffentlichungstag der Anmeldung: **19.11.2003**
(21) Anmeldenummer: 03010087.9
(22) Anmeldetag: 03.05.2003
(51) Int. Cl.: C08G 18/79, C08G 18/80

(54) **Bifunktionelle Polyadditionsverbindungen als Vernetzer für Polyurethan-Pulverlacke**

(30) Priorität: 11.05.2002 DE 10227183
(71) Anmelder: Degussa AG, 40474 Düsseldorf (DE)
(72) Erfinder: Wenning, Andreas, Dr., 48301 Nottuln (DE)

(57) **Zusammenfassung**

Gegenstand der vorliegenden Erfindung sind uretdiongruppen- und carboxylgruppenhaltige Polyadditionsverbindungen sowie ein Verfahren zu ihrer Herstellung. Die Erfindung betrifft weiterhin die Verwendung dieser Polyadditionsverbindungen als Ausgangskomponenten für Polyurethankunststoffe, insbesondere als Vernetzer für Polyurethan-Pulverlacke, die hydroxylgruppenhaltige Polymere und Verbindungen, die mit Carboxylgruppen reagieren, wie etwa Polyepoxide oder Hydroxyalkylamide, enthalten.

## Beschreibung

Gegenstand der vorliegenden Erfindung sind uretdiongruppen- und carboxylgruppenhaltige Polyadditionsverbindungen sowie ein Verfahren zu ihrer Herstellung. Die Erfindung betrifft weiterhin die Verwendung dieser Polyadditionsverbindungen als Ausgangskomponenten für Polyurethankunststoffe, insbesondere als Vernetzer für Polyurethan(PUR)-Pulverlacke. Diese PUR-Pulverlacke enthalten hydroxylgruppenhaltige Polymere und Verbindungen, die mit Carboxylgruppen reagieren. Dazu zählen z. B. Polyepoxide oder Hydroxyalkylamide.

Hitzehärtbare pulverförmige Massen, die man durch Reaktion eines hydroxylgruppenhaltigen Harzes mit einem maskierten Polyisocyanat erhält, gehören zum Stand der Technik und werden weit verbreitet angewandt. Von den maskierten Polyisocyanaten haben sich als PUR-Pulverhärter ∈-Caprolactam-blockierte Isophorondiisocyanat (IPDI)-Addukte durchgesetzt. Sie werden z. B. in DE 21 05 777, DE 25 42 191 und DE 30 04 876 beschrieben. Aus diesen mit ∈-Caprolactam blockierten IPDI-Addukten werden beim Einbrennen mit geeigneten Hydroxylverbindungen Lacke erhalten, die sich bei leichter Handhabbarkeit durch guten Verlauf, hohe Härte und Elastizität sowie gute Chemikalienbeständigkeit auszeichnen.

Die EP 0 056 167 beschreibt Pulverbeschichtungen, die aus einem Polyisocyanathärter mit ε-Caprolactam blockierten Isocyanatgruppen und Säuregruppen und einem Harz, das entweder Hydroxylgruppen enthält oder das Hydroxylgruppen durch Reaktion bilden kann, zusammengesetzt sind. Zusätzlich können Polyepoxide, wie etwa Triglycidylisocyanurat (TGIC), eingesetzt werden, die mit im Lacksystem vorhandenen Carboxylgruppen reagieren. Die Pulverbeschichtungen besitzen stets glänzende Oberflächen.

Seit geraumer Zeit gibt es ein zunehmendes Interesse an Pulverlacken, die eine matte Oberfläche ergeben. Die Ursache dafür ist überwiegend praktischer Art. Glänzende Flächen erfordern ein weitaus höheres Maß an Reinigung als matte Flächen. Darüber hinaus kann es aus sicherheitstechnischen Gründen wünschenswert sein, stark reflektierende Flächen zu vermeiden.

Das einfachste Prinzip, eine matte Oberfläche zu erhalten, besteht darin, dem Pulverlack je nach Ausmaß des gewünschten Matteffektes kleinere oder größere Mengen Füllstoffe, wie z. B. Kreide, fein verteiltes Siliciumoxid oder Bariumsulfat, beizumischen. Diese Zusätze bewirken jedoch eine Verschlechterung der lacktechnischen Filmeigenschaften, wie Haftung, Flexibilität, Schlagfestigkeit und Chemikalienbeständigkeit.

Die Zugabe von Stoffen, die mit dem Lack unverträglich sind, wie z. B. Wachse oder Cellulosederivate, bewirkt zwar deutlich eine Mattierung, aber geringfügige Änderungen während des Extrudierens rühren zu Schwankungen im Oberflächenglanz. Die Reproduzierbarkeit des Matteffektes ist nicht gewährleistet.

Matte Pulverlacke höherer Qualität werden erhalten, wenn die Mattierung durch eine chemische Vernetzungsreaktion verursacht wird.

So beschreibt die EP 0 104 424 die Verwendung eines carboxylgruppenhaltigen ε-Caprolactam blockierten Polyisocyanats als Vernetzer für matte Pulverlacke. Die während des Einbrennens freigesetzten Isocyanatgruppen des Vernetzers reagieren mit den Hydroxylgruppen des Polymeren. Die Säuregruppen im Vernetzer reagieren mit einem Polyepoxid.

Die EP 0 698 629 beansprucht einen Pulverlack, der aus einem Hydroxylgruppen aufweisenden Polyester, einem Polyisocyanathärter mit blockierten Isocyanatgruppen und Säuregruppen und einem β-Hydroxyalkylamid zusammengesetzt ist. Die Pulverlack-Oberflächen sind matt.

Ein gemeinsamer Nachteil all dieser PUR-Pulverlacke ist jedoch das Entweichen der bei der thermischen Vernetzung abgespaltenen Blockierungsmittel in die Umwelt. Bei ihrer Verarbeitung müssen daher ökologische und arbeitshygienische Maßnahmen getroffen werden. So werden u. a. die Abluft gereinigt oder das Blockierungsmittel wiedergewonnen.

Der Einsatz Blockierungsmittel freier PUR-Pulverlackvernetzer, die Uretdiongruppen enthalten, beseitigt diesen prinzipiellen Nachteil.

Es sind Vernetzer auf Basis von Uretdionen und bestimmten Aminen bekannt, die als Vernetzer für glänzende oder matte PUR-Pulverlacke eingesetzt werden können.

Die DE-OS 195 46 750 beschreibt Reaktionsprodukte aus Isophorondiisocyanat-Uretdion und disekundären Diaminen als Härter zur Herstellung von Polyurethan (PUR)-Beschichtungen mit glänzenden Oberflächen.

In der DE-OS 196 30 844 werden erstmals matte PUR-Pulverlacke beschrieben, die harnstoffgruppenhaltige Isophorondiisocyanat-Uretdione als Härterkomponente enthalten. Sie werden durch die Umsetzung von Uretdionen mit Wasser hergestellt. Dabei bilden sich intermediär unter Abspaltung von Kohlendioxid primäre Amine, die sich mit noch vorhandenen Isocyanatgruppen zu Harnstoffen umsetzen. Die Stickstoffatome der Harnstoffgruppen sind jeweils monosubstituiert. Reaktionen von Polyisocyanaten mit Wasser sind aufgrund der Bildung von Nebenprodukten schwierig zu reproduzieren.

Die DE-OS 196 37 375 beschreibt PUR-Pulverlacke, die durch Harnstoffgruppen haltige Isophorondiisocyanat-Uretdione als Härter mattierend eingestellt werden. Diese Härter entstehen durch die Umsetzung von Isophorondiisocyanat-Uretdion mit disekundären Diaminen. Die disekundären Diamine sind Umsetzungsprodukte aus diprimären Diaminen und Malein- oder Fumarsäureester.

In der DE-OS 196 37 377 und in der DE-OS 198 16 547 werden Uretdiongruppen und harnstoffgruppenhaltige Polyadditionsprodukte als Härterkomponente zur Mattierung von PUR-Pulverlacken offenbart. Die Herstellung dieser Härter erfolgt durch die Umsetzung von Isophorondiisocyanat-Uretdion mit Diaminen, die eine primäre und sekundäre Aminogruppen enthalten. Die Herstellung der reinen Diamine ist komplex und recht kostenintensiv.

Alle diese Blockierungsmittel freien PUR-Pulverlacke haben neben hohen Rohstoffkosten für Amine zudem den Nachteil einer mangelnden Flexibilität der daraus hergestellten Beschichtungen.

Aufgabe der vorliegenden Erfindung war es daher, Blockierungsmittel freie Vernetzer auf Basis uretdiongruppenhaltiger Polyadditionsverbindungen zu finden, die in Kombination mit hydroxylgruppenhaltigen Polymeren und gegebenenfalls Verbindungen, die mit Carboxylgruppen reagieren, wie etwa Polyepoxide oder Hydroxyalkylamide, zu PUR-Pulverlacken verarbeitet werden können, deren Beschichtungen eine gute Mechanik und deren Oberflächen je nach Einsatzzweck glänzend oder matt eingestellt werden können.

Überraschenderweise wurde gefunden, dass uretdiongruppenhaltige Polyadditionsverbindungen, die zusätzlich Carboxylgruppen aufweisen, diese Aufgabe erfüllen.

Gegenstand der vorliegenden Erfindung sind daher Polyadditionsverbindungen mit Uretdionund Carboxylgruppen, deren Schmelzbereiche zwischen 40 und 200 °C liegen, einen Gehalt an freien NCO-Gruppen von 0 bis 5 Gew.-% und eine NCO-Funktionalität von mindestens 1,5 aurweisen und deren zahlenmittleren Molmassen zwischen 1000 und 10000 variieren, aufgebaut aus den Ausgangskomponenten
A) 40 bis 90 Gew.-% mindestens eines Polyisocyanats mit Uretdiongruppen,
   und
B) 3 bis 30 Gew.-% mindestens einer Hydroxy- oder Mercaptocarbonsäure,
   und
C) mindestens eine gegenüber Isocyanaten reaktive monofunktionelle Verbindung,
   und/oder
D) mindestens ein aliphatisches und/oder cycloaliphatisches Polyol,
   und/oder
E) mindestens ein weiteres funktionelle Gruppen enthaltendes Polyol,
   und/oder
F) mindestens ein aliphatisches und/oder cycloaliphatisches Polyamin,
in einer Gesamtmenge C), D), E) und F) von 57 bis 3 Gew.-%, wobei das Mischungsverhältnis von C) zu D) zu E) zu F) frei wählbar ist und eine Komponente auch allein enthalten sein kann.

Gegenstand der Erfindung ist auch ein Verfahren zur Herstellung von Polyadditionsverbindungen mit Uretdion- und Carboxylgruppen, deren Schmelzbereiche zwischen 40 und 200 °C liegen, die einen Gehalt an freien NCO-Gruppen von 0 bis 5 Gew.-% und eine NCO-Funktionalität von mindestens 1,5 aufweisen und deren zahlenmittleren Molmassen zwischen 1000 und 10000 variieren, durch Umsetzung von
A) 40 bis 90 Gew.-% mindestens eines Polyisocyanats mit Uretdiongruppen,
   und
B) 3 bis 30 Gew.-% mindestens einer Hydroxy- oder Mercaptocarbonsäure,
   und
C) mindestens eine gegenüber Isocyanaten reaktive monofunktionelle Verbindung,
   und/oder
D) mindestens eine aliphatisches und/oder cycloaliphatisches Polyol,
   und/oder
E) mindestens ein weiteres funktionelle Gruppen enthaltendes Polyol,
   und/oder
F) mindestens ein aliphatisches und/oder cycloaliphatisches Polyamin,
in einer Gesamtmenge C), D), E) und F) von 57 bis 3 Gew.-%, wobei das Mischungsverhältnis von C) zu D) zu E) zu F) frei wählbar ist und eine Komponente auch allein enthalten sein kann. Einen Gehalt an freien NCO-Gruppen von 0 bis 5 Gew.-% und eine NCO-Funktionalität von mindestens 1,5 aufweisen und die zahlenmittleren Molmassen zwischen 1000 und 10000 variieren, bei Temperaturen von 40 bis 200 °C.

Mit den erfindungsgemäßen Polyadditionsverbindungen lassen sich in Verbindung mit hydroxylgruppenhaltigen Polymeren und gegebenenfalls Verbindungen, die mit Carboxylgruppen reagieren, PUR-Pulverlacke mit guter Mechanik herstellen. Ein weiterer Gegenstand der Erfindung ist daher die Verwendung der uretdiongruppenhaltigen Polyadditionsverbindungen zur Herstellung von Blockierungsmittel freien, transparenten oder pigmentierten PUR-Pulverlacken mit glänzender oder matter Oberfläche.

Gegenstand der Erfindung sind auch Blockierungsmittel freie, transparente oder pigmentierte PUR-Pulverlacke, welche die erfindungsgemäßen uretdion- und carboxylgruppenhaltigen Polyadditionsverbindungen enthalten.

Die erfindungsgemäß eingesetzten Uretdiongruppen aufweisenden Polyisocyanate A) mit einer mittleren Isocyanatfunktionalität von mindestens 2,0 werden in an sich bekannter Weise aus beliebigen Diisocyanaten durch katalytische Dimerisierung eines Teils der Isocyanatgruppen einfacher Diisocyanate und vorzugsweise sich anschließende Abtrennung des nicht umgesetzten Diisocyanatüberschusses, beispielsweise durch Dünnschichtdestillation, erhalten. Bei den Diisocyanaten zur Herstellung der Polyisocyanate A) handelt es sich um aliphatische, cycloaliphatische, araliphatische und/oder aromatische Diisocyanate. Bevorzugte Beispiele sind 1,4-Diisocyanatobutan, 1,6-Diisocyanatohexan (HDI), 2-Methylpentamethylendiisocyanat-1,5 (MPDI), 2,2,4 (2,4,4)-Trimethylhexamethylendiisocyanat (TMDI), 4,4'-Diisocyanatodicyclohexylmethan (H₁₂MDI), 1,3- und 1,4-Diisocyanatocyclohexan, Isophorondiisocyanat (IPDI), Norbornandiisocyanat, Diphenylmethan-2,4' und/oder -4,4'diisocyanat, Xylylendiisocyanat oder 2,4- und 2,6-Toluylendiisocyanat sowie beliebige Gemische dieser Isomeren, wobei diese Diisocyanate allein oder in Mischungen zur Herstellung der Polyisocyanate A) eingesetzt werden können. Auch die Uretdiongruppen aufweisenden Polyisocyanate sind beliebig untereinander mischbar.

Als Katalysatoren zur Herstellung der Polyisocyanate A) aus den genannten Diisocyanaten sind grundsätzlich alle bekannten, die Dimerisierung von Isocyanatgruppen katalysierenden Verbindungen geeignet. Beispiele sind tertiäre organische Phosphine (US-PS 4614785, DE-OSS 1934763, 3900053), Tris-(dialkylamino)-phosphine (DE-OSS 3030513, 3227779, 3437635), substituierte Pyridine (DE-OSS 1081895, 3739549) und substituierte Imidazole oder Benzimidazole (EP 417603).

Bevorzugte Polyisocyanate A) für das erfindungsgemäße Verfahren sind Uretdiongruppen aufweisende Polyisocyanate, die aus Diisocyanaten mit aliphatisch und/oder cycloaliphatisch gebundenen Isocyanatgruppen hergestellt sind.

Besonders bevorzugt werden die Uretdione des Isophorondiisocyanats (IPDI), des 2-Methylpentamethylendiisocyanat-1,5 (MPDI), des 2,2,4 (2,4,4)-Trimethylhexamethylendiiso-cyanat (TMDI), des 4,4'-Diisocyanatodicyclohexylmethan (H₁₂MDI), des Norbornandiiso-cyanats (NBDI) und des 1,6-Diisocyanatohexan (HDI) verwendet.

Ganz besonders bevorzugt ist das Uretdion des Isophorondiisocyanats. Die Verwendung von Isophorondiisocyanat erlaubt die Herstellung eines isocyanuratfreien Uretdions. Dieses Uretdion ist bei Raumtemperatur hochviskos und hat eine Viskosität größer als 10⁶ mPa·s, bei 60 °C liegt die Viskosität bei 13·10³ mPa·s und bei 80 °C bei 1,4 ·10³ mPa·s. Der freie NCO-Gehalt liegt zwischen 16,8 und 18,5 Gew.-%, d. h. dass mehr oder minder hohe Anteile an Polyuretdion des IPDI im Reaktionsprodukt vorliegen müssen. Der Monomergehalt liegt bei 1 Gew.-%. Der Gesamt-NCO-Gehalt des Reaktionsproduktes nach dem Erhitzen auf 180 bis 200 °C beträgt 37,5 bis 37,8 Gew.-%.

Während der Dimerisierung anderer aliphatischer Diisocyanate bei an sich bekannten Verfahren und Katalysatoren bildet sich als Nebenprodukt Isocyanurat in unterschiedlichen Mengen, so dass die NCO-Funktionalität der eingesetzten isocyanurathaltigen Polyisocyanat-Uretdione zwischen 2 und 2,6 beträgt.

Bei der Hydroxy- oder Mercaptocarbonsäure B) handelt es sich beispielsweise um Glykolsäure, Thioglykolsäure, Milchsäure, Trichlormilchsäure, 2,2-Bis-(hydroxymethyl) propionsäure, 2,2-Bis-(hydroxymethyl)buttersäure, Äpfelsäure, Dioxymaleinsäure, Dioxyfumarsäure, Weinsäure, Dioxyweinsäure, Schleimsäure, Zuckersäure, Zitronensäure, Salicylsäure, 2,6-Dioxybenzoesäure, Protocatechusäure, α-Resorcylsäure, β-Resorcylsäure, Hydrochinon-2,5-dicarbonsäure, 4-Hydroxyisophthalsäure, 4,6-Dihydroxyisophthalsäure, Oxyterephthalsäure, 5,6,7,8-Tetrahydro-naphthol-(2)-carbonsäure-(3), 1-Hydroxynaphthoesäure-(2), 2,8-Dihydroxynaphthoesäure-(3), β-Oxypropionsäure oder m-Oxybenzoesäure. Bevorzugt wird 2,2-Bis-(hydroxymethyl)propionsäure eingesetzt.

Bei der Herstellung der erfindungsgemäßen Polyadditionsverbindungen können gegebenenfalls gegenüber Isocyanatgruppen reaktive monofunktionelle Verbindungen C) mitverwendet werden. Sie dienen zur irreversiblen Verkappung freier NCO-Gruppen. Hierbei handelt es sich insbesondere um Monoalkohole wie Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanol sowie Hydroxymethylcyclohexan oder einfache aliphatische bzw. cycloaliphatische Monoamine wie Methylamin, Ethylamin, n-Propylamin, Isopropylamin, die isomeren Butylamine, Pentylamine, Hexylamine und Octylamine, n-Dodecylamin, n-Tetradecylamin, n-Hexadecylamin, n-Octadecylamin, Cyclohexylamin, die isomeren Methylcyclohexylamine sowie Aminomethylcyclohexan, sekundäre Monoamine, wie Dimethylamin, Diethylamin, Dipropylamin, Diisopropylamin, Dibutylamin, Diisobutylamin, Bis(2-ethylhexyl)-amin, N-Methyl- und N-Ethylcyclohexylamin sowie Dicyclohexylamin, allein oder in Mischungen.

Für die Synthese der erfindungsgemäßen uretdion- und carboxylgruppenhaltigen Polyadditionsverbindungen eignen sich alle in der PUR-Chemie üblicherweise eingesetzten Polyole D). Beispiel sind Ethylenglykol, Propandiol-1,3, Butandiol-1,4, Pentandiol-1,5, 3-Methylpentandiol-1,5, Hexandiol-1,6, 2,2,4 (2,4,4)-Trimethylhexandiol-1,6, Hydroxypivalinsäureneopentylglykolester, 1,4-Di(hydroxymethyl)cyclohexan, Diethylenglykol, Triethylenglykol, Diethanolmethylamin, Neopentlylglykol, Triethanolamin, Trimethylolpropan, Trimethylolethan, Glycerin oder Pentaerythrit. Sie werden einzeln oder in Mischungen eingesetzt.

Als weitere funktionelle Gruppen enthaltende Polyole E) eignen sich lineare oder verzweigte hydroxylgruppenhaltige Polyester, Polycaprolactone, Polycarbonate, Polyether, Polythioether, Polyesteramide, Polyurethane oder Polyacetale mit zahlenmittleren Molekulargewichten von 134 bis 3500. Bevorzugt werden lineare hydroxylhaltige Polyester und Polycaprolactone eingesetzt.

Besonders vorteilhaft ist die Verwendung von hydroxylgruppenhaltigen, linearen Polyestern mit einer Molmasse zwischen 250 und 2 000, vorzugsweise 300 bis 1 500. Sie werden hergestellt z. B. durch Kombination von Diolen und Dicarbonsäuren. Zur Herstellung der Polyole E) werden bevorzugt neben den oben unter D) genannten Diolen auch 2-Methylpropandiol, 2,2-Dimethylpropandiol, Diethylenglykol, Dodecandiol-1,12 sowie trans- und cis-Cyclohexandimethanol eingesetzt. Zu den bevorzugten Dicarbonsäuren zählen aliphatische, ggf. alkylverzweigte Dicarbonsäuren wie Bernstein-, Adipin-, Kork-, Azelain- und Sebacinsäure und 2,2,4 (2,4,4)-Trimethyladipinsäure. Weiterhin werden auch Hydroxycarbonsäuren wie Hydroxycapronsäure dazu gezählt.

Als aliphatische oder cycloaliphatische Polyamine F) können alle primären oder sekundären Dioder Polyamine eingesetzt werden. Polyamine mit primären und sekundären Aminogruppen in einer Verbindung sind ebenso einsetzbar wie Mischungen aus primären und/oder sekundären und/oder primär/sekundären Polyaminen. Bevorzugte derartige Polyamine werden in DE 195 46 750, DE 196 37 375, DE 196 37 377, DE 198 16 547 oder DE 198 31 307 beschrieben.

Die Herstellung der erfindungsgemäßen uretdion- und carboxylgruppenhaltigen Polyadditionsverbindungen kann diskontinuierlich sowohl im Lösemittel als auch in Substanz, also Lösemittel frei, erfolgen.

Die Umsetzung im Lösemittel erfolgt im allgemeinen bei Temperaturen von 40 bis 100 °C, vorzugsweise zwischen 60 und 90 °C. Die Komponenten B) und/oder D) und /oder E) und/oder F) werden vorgelegt und das Polyisocyanat mit Uretdiongruppen A) so rasch wie möglich zugesetzt, ohne dass die Reaktionstemperatur die o. g. Grenzen überschreitet. Die Umsetzung ist nach 30 bis 150 Minuten beendet. Die Komponente C) kann während der Reaktion anwesend sein als auch nach beendeter Reaktion zugegeben werden. Anschließend wird das Lösemittel entfernt. Dazu geeignet sind z. B. Abdampfschnecken, Filmtruder oder Sprühtrockner.

Geeignete Lösemittel sind Benzol, Toluol oder andere aromatische bzw. aliphatische Kohlenwasserstoffe, Essigester wie Ethylacetat oder Butylacetat, auch Ketone wie Aceton, Methylethylketon, Methylisobutylketon oder chlorierte aromatische und aliphatische Kohlenwasserstoffe sowie beliebige Gemische dieser oder anderer gegenüber den reaktiven Gruppen der erfindungsgemäßen Zusammensetzung inerter Lösemittel.

Die Lösemittel freie Umsetzung erfolgt diskontinuierlich in einem Kessel bei Temperaturen bis zu 200 °C.

Zur Beschleunigung der Polyadditionsreaktion können auch die in der PUR-Chemie üblichen Katalysatoren verwendet werden. Als besonders geeignet erwiesen sich Zinn-II- und -IV-Verbindungen. Genannt ist hier besonders Dibutylzinndilaurat (DBTL). Die Katalysatoren werden in einer Konzentration von 0,01 bis 1 Gew.-%, vorzugsweise von 0,03 bis 0,5 Gew.-% bezogen auf die eingesetzten Reaktionskomponenten eingesetzt.

Ein weiterer Gegenstand der vorliegenden Erfindung ist die Verwendung der Uretdion- und Carboxylgruppen enthaltenden Polyadditionsverbindungen zur Herstellung von Blockierungsmittel freien, transparenten oder pigmentierten PUR-Pulverlacken mit guter Mechanik und glänzender oder matter Oberfläche.

Gegenstand der Erfindung sind auch Blockierungsmittel freie, transparente oder pigmentierte PUR-Pulverlacke, welche die erfindungsgemäßen uretdion- und carboxylgruppenhaltigen Polyadditionsverbindungen, funktionelle Gruppen enthaltende Polymere, gegebenenfalls Verbindungen, die mit Carboxylgruppen reagieren, z. B. Polyepoxide oder β-Hydroxyalkylamide, und weitere in der PUR-Chemie übliche Hilfs- und Zuschlagsstoffe enthalten.

Als funktionelle Gruppen enthaltende Polymere kommen Verbindungen in Frage, die solche funktionellen Gruppen tragen, die sich mit Isocyanatgruppen während des Härtungsprozesses in Abhängigkeit von Temperatur und Zeit umsetzen, z. B. Hydroxyl-, Carboxyl-, Mercapto-, Amino-, Urethan- und (Thio)-Harnstoffgruppen. Als Polymere können Polymerisate, Polykondensate und Polyadditionsverbindungen eingesetzt werden.

Bevorzugte Komponenten sind in erster Linie amorphe Polymere wie Polyether, Polythioether, Polyacetale, Polyesteramide, Epoxidharze mit Hydroxylgruppen im Molekül, Aminoplaste und ihre Modifizierungsprodukte mit polyfunktionellen Alkoholen, Polyazomethine, Polyurethane, Polysulfonamide, Melaminabkömmlinge, Celluloseester und - ether, teilweise verseifte Homo- und Copolymerisate von Vinylestern, allein oder in Mischungen, insbesondere aber hydroxylgruppenhaltige Polyester- und Acrylatharze.

Die bevorzugt einzusetzenden hydroxylgruppenhaltigen Polyester haben eine OH-Funktionalität von > 2, eine OH-Zahl von 20 bis 200 mg KOH/g, vorzugsweise von 30 bis 150 mg KOH/g, eine Viskosität von <60 000 mPa·s, vorzugsweise <40 000 mPa·s bei 140 °C und einen Schmelzpunkt von > 70 °C bis < 120 °C, vorzugsweise von 75 °C bis 100 °C.

Die Polyester können aus an sich bekannte Weise durch Kondensation in einer Inertgasatmosphäre bei Temperaturen von 100 bis 260 °C, vorzugsweise von 130 bis 220 °C, in der Schmelze oder in azeotroper Fahrweise gewonnen werden, wie es z. B. in Methoden der Organischen Chemie (Houben-Weyl), Bd. 14/2, 1 - 5, 21 - 23, 40 - 44, Georg Thieme Verlag, Stuttgart, 1963 oder bei C. R. Martens, Alkyd Resins, 51 - 59, Reinhold Plastics Appl. Series, Reinhold Publishing Comp., New York, 1961, oder in DE 27 35 497 und DE 30 04 903 beschrieben ist.

Die Hydroxyacrylate haben eine OH-Zahl von 20 bis 150 mg KOH/g. Ihre Herstellung wird z. B. in DE 30 30 539 und DE 197 30 669 beschrieben.

Als Polyhydroxylverbindungen können selbstverständlich auch Gemische mehrerer Stoffe eingesetzt werden.

Das Mischungsverhältnis von hydroxylgruppenhaltigen Polymeren und erfindungsgemäßer uretdion- und carboxylgruppenhaltiger Polyadditionsverbindung wird in der Regel so gewählt, dass auf eine OH-Gruppe 0,5 bis 1,2, bevorzugt 0,8 bis 1,1, ganz besonders bevorzugt 1,0 NCO-Gruppen entfallen.

Als Verbindungen, die mit den Carboxylgruppen in der erfindungsgemäßen Polyadditionsverbindung reagieren, werden bevorzugt Polyepoxide oder β-Hydroxyalkylamide eingesetzt.

Eine Vielzahl an Polyepoxiden können in der Pulverlackformulierung eingesetzt werden. Bevorzugt sollten die Polyepoxide ein 1,2-Epoxyäquivalentgewicht größer als 1 und besonders bevorzugt größer als 1,9 besitzen. Beispiele von Polyepoxiden sind Polyglycidylether aromatischer Polyole wie etwa Polyphenole oder Bisphenol A. Ebenfalls sind Polyglycidylether von Polyalkoholen einsetzbar. Beispielhaft seien die Polyalkohole 1,2-Ethandiol, 1,2-Propandiol, 1,3-Propandiol, 1,4-Butandiol, 1,5- Pentandiol, Diethylenglykol, Triethylenglykol, Polyethylenglykol und Polypropylenglykol genannt. Als Polyepoxide sind auch Verbindungen einsetzbar, die klassischerweise als Vernetzer in Pulverlacken fungieren. Araldit PT 810 oder Araldit PT 910 der Fa. Vantico sind als Beispiel genannt.

Als β-Hydroxyalkylamide sind prinzipiell alle geeignet, wie z. B. die aus EP 322 834, EP 957 082, EP 960 878, GB 1 489 485 und WO 00/55 266, insbesondere VESTAGON EP-HA 320 der Fa. Degussa, PRIMID XL-552, PRIMID QM 1260 und PRIMID SF 4510 der Fa. EMS und PROSID H und PROSID S der Fa. SIR Industriale genannt.

Das Mischungsverhältnis von der Verbindung, die mit den Carboxylgruppen in der erfindungsgemäßen uretdion- und carboxylgruppenhaltigen Polyadditionsverbindung reagiert, und erfindungsgemäßer uretdion- und carboxylgruppenhaltiger Polyadditionsverbindung wird so gewählt, dass auf eine Hydroxyl- oder Epoxidgruppe 0,5 bis 1,6, bevorzugt 0,8 bis 1,1, ganz besonders bevorzugt 1,0 NCO-Gruppen entfallen.

Die erfindungsgemäßen Pulverlacke enthalten weiterhin 0 bis 50 Gew.-% Pigmente und/oder anorganische Füllstoffe, wie z. B. TiO₂, Farbpigmente, Metallpigmente, Effektpigmente und/oder Bariumsulfat.

Außerdem enthalten die erfindungsgemäßen Pulverlacke 0 bis 5 Gew.-% Zuschlags- und/oder Hilfsstoffe, welche ausgewählt werden aus Verlaufmitteln, Katalysatoren, Entgasungsmittel, Thixotropiermittel, Stabilisatoren wie z. B. Polyacrylatharze, Siliconöle (Verlaufmittel); Organozinnverbindungen wie Dibutylzinndilaurat (DBTL), Zinn(II)octoat, Amine wie 1,5-Diazabicyclo[4.3.0]non-5-en (DBN), 1,4 Diazabicyclo[2.2.2]octan (DABCO), 1,8-Diazabicyclo[5.40]undec-7-en(DBU), 4-(Dimethylamino)-pyridin(DMAP) (Katalysatoren); Benzoin (Entgasungsmittel); Benztriazole, HALS (Hindered Amine Light Stabilizer)-Verbindungen (UV-Stabilisatoren und Radikalfänger).

Je nach Einsatz- und Verwendungszweck der erfindungsgemäßen Pulverlacke können Pigmente, Füllstoffe und Zuschlags- oder Hilfsstoffe in ihrer Art und Menge entsprechend variabel in den Pulverlacken enthalten sein.

Die erfindungsgemäßen uretdion- und carboxylgruppenhaltigen Polyadditionsverbindungen werden für die Herstellung von PUR-Pulverlacken mit dem geeigneten Hydroxylgruppen haltigen Polymeren, gegebenenfalls mit Verbindungen, die mit Carboxylgruppen reagieren, z. B. Polyepoxide oder β-Hydroxyalkylamide, und gegebenenfalls Katalysatoren sowie Pigmenten, Füllstoffen und Verlaufmitteln, z. B. Siliconöl oder Acrylatharze, gemischt. Bei flüssigen Verlaufmitteln erfolgt die Zugabe als Masterbatch mit dem hydroxylgruppenhaltigen Polymeren. Alle Inhaltsstoffe des Pulverlackes werden in der Schmelze homogenisiert. Dies kann in geeigneten Aggregaten, wie z. B. beheizbaren Knetern, vorzugsweise jedoch durch Extrudieren, erfolgen, wobei Temperaturobergrenzen von 130 bis 140 °C nicht überschritten werden sollten. Die extrudierte Masse wird nach Abkühlen auf Raumtemperatur und nach geeigneter Zerkleinerung zum sprühfertigen Pulver vermahlen. Das Auftragen des sprühfertigen Pulvers auf geeignete Substrate kann nach den bekannten Verfahren, wie z. B. durch elektrostatisches oder tribostatisches Pulversprühen, Wirbelsintern oder elektrostatisches Wirbelsintern, erfolgen. Nach dem Pulverauftrag werden die beschichteten Werkstücke zur Aushärtung 60 bis 10 Minuten auf eine Temperatur von 160 bis 220 °C, vorzugsweise 30 bis 10 Minuten bei 170 bis 200 °C, erhitzt.

Im Vergleich zu den bis jetzt bekannten PUR-Pulverlacken zur Herstellung von glänzenden oder matten Oberflächen auf Basis extern blockierter Polyisocyanate mit Carboxylgruppen zeichnen sich die Beschichtungen auf den erfindungsgemäßen PUR-Pulverlacken durch eine höhere Umweltverträglichkeit aus. Die Lackfilme sind sehr flexibel, und ihre Oberflächen sind sowohl glänzend als auch matt einstellbar.

Die erfindungsgemäßen Polyadditionsprodukte, das Verfahren zur Herstellung der erfindungsgemäßen Polyadditionsprodukte sowie die erfindungsgemäßen PUR-Pulverlacke sowie das Verfahren zur Herstellung der erfindungsgemäßen PUR-Pulverlacke werden nachfolgend anhand von Beispielen beschrieben.

### Beispiele

### A) Herstellung der erfindungsgemäßen uretdion- und carboxylgruppenhaltigen Polyadditionsverbindungen

### Beispiel 1

719 g IPDI-Uretdion wurden in 450 ml Aceton gelöst und mit 194 g 2,2-Bis-(hydroxymethyl)propionsäure, 855 g Hexandiol-1,6 und 10 g Dibutylzinndilaurat so versetzt, dass die Temperatur der Reaktionslösung nicht über 60 °C stieg. Die Umsetzung wurde mittels titrimetrischer NCO-Bestimmung kontrolliert. Danach wurde das Lösemittel entfernt, das Produkt abgekühlt und ggf. zerkleinert. Das Produkt hatte einen latenten NCO-Gehalt von 13,7 % und einen Schmelzbereich von 134 bis 137 °C.

### Beispiel 2

753 g IPDI-Uretdion wurden in 450 ml Aceton gelöst und mit 155 g 2,2-Bis-(hydroxymethyl)propionsäure, 911 g Hexandiol-1,6 und 10 g Dibutylzinndilaurat so versetzt, dass die Temperatur der Reaktionslösung nicht über 60 °C stieg. Die Umsetzung wurde mittels titrimetrischer NCO-Bestimmung kontrolliert. Danach wurde das Lösemittel entfernt, das Produkt abgekühlt und ggf. zerkleinert. Das Produkt hatte einen latenten NCO-Gehalt von 14,7 % und einen Schmelzbereich von 152 bis 159 °C.

### B) Eingesetzter Polyester

Als OH-Komponente zur Herstellung des erfindungsgemäßen PUR-Pulverlackes wurde der Polyester ALFTALAT® AN 739 (Fa. Solutia) mit einer OH-Zahl von 55 bis 60 mg KOH/g, einer Säurezahl von 2 bis 4 mg KOH/g, einem Schmelzpunkt von 82 bis 90 °C und einer Viskosität bei 160 °C von 24 bis 29 Pa·s eingesetzt.

### C) Polyurethan-Pulverlacke

### Allgemeine Herstellvorschrift

Die zerkleinerten Verbindungen - uretdion- und carboxylgruppenhaltige Polyadditionsverbindung (Vernetzer), Polyesterharz (ALFTALAT® AN 739), VESTAGON EP-HA 320, Verlaufmittel RESIFLOW PV 88, Entgasungsmittel Benzoin, Katalysator Dibutylzinndilaurat und Weißpigment Kronos 2160 wurden in einem Kollergang innig vermischt und anschließend im Extruder bei 80 bis 140 °C homogenisiert. Nach dem Erkalten wurde das Extrudat gebrochen und mit einer Stiftsmühle auf eine Korngröße < 100 m gemahlen. Das so hergestellte Pulver wurde mit einer elektrostatischen Pulverspritzanlage bei 60 KV auf entfettete, gegebenenfalls vorbehandelte Eisenbleche appliziert und in einem Umlufttrockenschrank bei 200 °C 30 Minuten eingebrannt.

### Beispiel 3 (Verwendung)

Die Formulierung bestand aus 155 g der uretdion- und carboxylgruppenhaltigen Polyadditionsverbindung aus Beispiel 1, 411 g des Polyesters Alftalat AN 739, 19,2g VESTAGON EP-HA 320, 1,0 g Resiflow PV 88 (Verlaufmittel der Fa. Worlée Chemie), 5 g Benzoin (Entgasungsmittel der Fa. Merck-Schuchard), 1,5 g DBTL (Katalysator der Fa. Crompton Vinyl Additives GmbH) und 400 g Kronos 2160 (Weißpigment der Fa. Kronos).

### Beispiel 4 (Verwendung)

Die Formulierung bestand aus 129 g der Uretdion- und Carboxylgruppen haltigen Polyadditionsverbindung aus Beispiel 2, 442 g des Polyesters Alftalat AN 739, 13,5g VESTAGON EP-HA 320, 1,0 g Resiflow PV 88 (Verlaufmittel der Fa. Worlée Chemie), 5 g Benzoin (Entgasungsmittel der Fa. Merck-Schuchard), 1,5 g DBTL (Katalysator der Fa. Crompton Vinyl Additives GmbH) und 400 g Kronos 2160 (Weißpigment der Fa. Kronos).

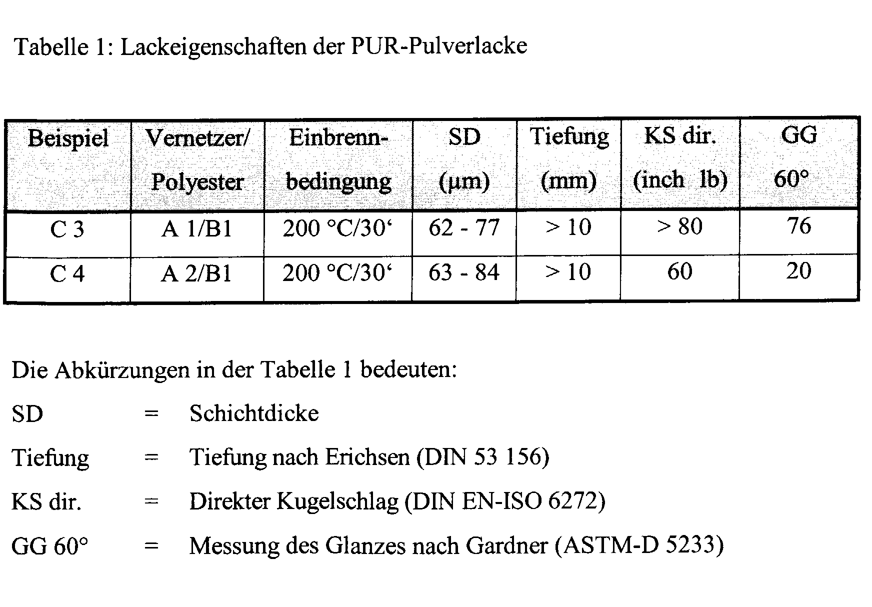

## Patentansprüche

1. Polyadditionsverbindungen mit Uretdion- und Carboxylgruppen, deren Schmelzbereiche zwischen 40 und 200 °C liegen, die einen Gehalt an freien NCO-Gruppen von 0 bis 5 Gew.-% und eine NCO-Funktionalität von mindestens 1,5 aufweisen und deren zahlenmittleren Molmassen zwischen 1000 und 10000 variieren, aufgebaut aus den Ausgangskomponenten
A) 40 bis 90 Gew.-% mindestens eines Polyisocyanats mit Uretdiongruppen,
und
B) 3 bis 30 Gew.-% mindestens einer Hydroxy- oder Mercaptocarbonsäure,
und
C) mindestens eine gegenüber Isocyanaten reaktive monofunktionelle Verbindung,
und/oder
D) mindestens ein aliphatisches und/oder cycloaliphatisches Polyol,
und/oder
E) mindestens ein weiteres funktionelle Gruppen enthaltendes Polyol,
und/oder
F) mindestens ein aliphatisches und/oder cycloaliphatisches Polyamin,
in einer Gesamtmenge C), D), E) und F) von 57 bis 3 Gew.-%, wobei das Mischungsverhältnis von C) zu D) zu E) zu F) frei wählbar ist und eine Komponente auch allein enthalten sein kann.

2. Polyadditionsverbindungen mit Uretdion- und Carboxylgruppen nach Anspruch 1,
**dadurch gekennzeichnet,**
**dass** als Polyisocyanate mit Uretdiongruppen A) die Dimerisierungsprodukte von aliphatischen, cycloaliphatischen, araliphatischen oder aromatischen Diisocyanaten eingesetzt werden.

3. Polyadditionsverbindungen mit Uretdion- und Carboxylgruppen nach Anspruch 2,
**dadurch gekennzeichnet,**
**dass** 1,4-Diisocyanatobutan, 1,6-Diisocyanatohexan (HDI), 2-Methylpentamethylendiisocyanat-1,5 (MPDI), 2,2,4 (2,4,4)-Trimethylhexamethylendiisocyanat (TMDI), 4,4'-Diisocyanatodicyclohexylmethan (H₁₂MDI), 1,3- und 1,4-Diisocyanatocyclohexan, Isophorondiisocyanat (IPDI), Norbomandiisocyanat, Diphenylmethan-2,4' und/oder - 4,4'-diisocyanat, Xylylendiisocyanat oder 2,4- und 2,6-Toluylendiisocyanat sowie beliebige Gemische dieser Isomeren, allein oder in Mischungen, eingesetzt werden.

4. Polyadditionsverbindungen mit Uretdion- und Carboxylgruppen nach Anspruch 3,
**dadurch gekennzeichnet,**
**dass** als Polyisocyanate mit Uretdiongruppen A) die Dimerisierungsprodukte Isophorondiisocyanat, 2-Methylpentamethylendiisocyanat-1,5, 2,2,4 (2,4,4)-Trimethylhexamethylendiisocyanat, 4,4'-Diisocyanatodicyclohexylmethan, Norbornandiisocyanat oder 1,6-Diisocyanatohexan, allein oder in Mischungen, eingesetzt werden.

5. Polyadditionsverbindungen mit Uretdion- und Carboxylgruppen nach Anspruch 4,
**dadurch gekennzeichnet,**
**dass** das Uretdion des IPDI eingesetzt wird.

6. Polyadditionsverbindungen mit Uretdion- und Carboxylgruppen nach mindestens einem der vorherigen Ansprüche,
**dadurch gekennzeichnet,**
**dass** als Hydroxy- oder Mercaptocarbonsäure B) Glykolsäure, Thioglykolsäure, Milchsäure, Trichlormilchsäure, 2,2-Bis-(hydroxymethyl)propionsäure, 2,2-Bis-(hydroxymethyl)buttersäure, Äpfelsäure, Dioxymaleinsäure, Dioxyfumarsäure, Weinsäure, Dioxyweinsäure, Schleimsäure, Zuckersäure, Zitronensäure, Salicylsäure, 2,6-Dioxybenzoesäure, Protocatechusäure, α-Resorcylsäure, β-Resorcylsäure, Hydrochinon-2,5-dicarbonsäure, 4-Hydroxyisophthalsäure, 4,6-Dihydroxyisophthalsäure, Oxyterephthalsäure, 5,6,7,8-Tetrahydro-naphthol-(2)-carbonsäure-(3), 1-Hydroxynaphthoesäure-(2), 2,8-Dihydroxynaphthoesäure-(3), β-Oxypropionsäure oder m-Oxybenzoesäure, allein oder in Mischungen, eingesetzt werden.

7. Polyadditionsverbindungen mit Uretdion- und Carboxylgruppen nach Anspruch 6,
**dadurch gekennzeichnet,**
**dass** 2,2-Bis-(hydroxymethyl)propionsäure eingesetzt wird.

8. Polyadditionsverbindungen mit Uretdion- und Carboxylgruppen nach mindestens einem der vorherigen Ansprüche,
**dadurch gekennzeichnet,**
**dass** als gegenüber Isocyanaten reaktiven monofunktionellen Verbindungen C) Monoalkohole und/oder aliphatische und/oder cycloaliphatische Monoamine eingesetzt werden.

9. Polyadditionsverbindungen mit Uretdion- und Carboxylgruppen nach Anspruch 8,
**dadurch gekennzeichnet,**
**dass** als gegenüber Isocyanaten reaktiven monofunktionellen Verbindungen C) Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanol, Hydroxymethylcyclohexan, Methylamin, Ethylamin, n-Propylamin, Isopropylamin, die isomeren Butylamine, Pentylamine, Hexylamine und Octylamine, n-Dodecylamin, n-Tetradecylamin, n-Hexadecylamin, n-Octadecylamin, Cyclohexylamin, die isomeren Methylcyclohexylamine, Aminomethylcyclohexan, sekundäre Monoamine, wie Dimethylamin, Diethylamin, Dipropylamin, Diisopropylamin, Dibutylamin, Diisobutylamin, Bis(2-ethylhexyl)-amin, N-Methyl- und N-Ethylcyclohexylamin oder Dicyclohexylamin, allein oder in Mischungen, eingesetzt werden.

10. Polyadditionsverbindungen mit Uretdion- und Carboxylgruppen nach mindestens einem der vorherigen Ansprüche,
**dadurch gekennzeichnet,**
**dass** als aliphatische oder cycloaliphatische Polyole D) Ethylenglykol, Propandiol-1,3, Butandiol-1,4, Pentandiol-1,5, 3-Methyl-pentandiol-1,5, Hexandiol-1,6, 2,2,4(2,4,4)-Trimethylhexandiol-1,6, Hydroxypivalinsäureneopentylglykolester, 1,4-Di(hydroxymethyl)-cyclohexan, Diethylenglykol, Triethylenglykol, Diethanolmethylamin, Neopentlylglykol, Triethanolamin, Trimethylolpropan, Trimethylolethan, Glycerin oder Pentaerythrit, allein oder in Mischungen, eingesetzt werden.

11. Polyadditionsverbindungen mit Uretdion- und Carboxylgruppen nach mindestens einem der vorherigen Ansprüche,
**dadurch gekennzeichnet,**
**dass** als weitere funktionelle Gruppen enthaltende Polyole E) lineare oder verzweigte Hydroxylgruppen haltige Polyester, Polycaprolactone, Polycarbonate, Polyether, Polythioether, Polyesteramide, Polyurethane oder Polyacetale mit zahlenmittleren Molekulargewichten von 134 bis 3500, allein oder in Mischungen, eingesetzt werden.

12. Polyadditionsverbindungen mit Uretdion- und Carboxylgruppen nach Anspruch 11,
**dadurch gekennzeichnet,**
**dass** als weitere funktionelle Gruppen enthaltende Polyole E) lineare hydroxylgruppenhaltige Polyester oder Polycaprolactone eingesetzt werden.

13. Polyadditionsverbindungen mit Uretdion- und Carboxylgruppen nach Anspruch 12,
**dadurch gekennzeichnet,**
**dass** hydroxylgruppenhaltige, lineare Polyester mit einer Molmasse zwischen 250 und 2 000 eingesetzt werden.

14. Polyadditionsverbindungen mit Uretdion- und Carboxylgruppen nach mindestens einem der vorherigen Ansprüche,
**dadurch gekennzeichnet,**
**dass** als aliphatische oder cycloaliphatische Polyamine F) primäre, sekundäre, primär/sekundäre Di- oder Polyamine oder beliebige Mischungen davon eingesetzt werden.

15. Verfahren zur Herstellung von Polyadditionsverbindungen mit Uretdion- und Carboxylgruppen, deren Schmelzbereiche zwischen 40 und 200 °C liegen, die einen Gehalt an freien NCO-Gruppen von 0 bis 5 Gew.-% und eine NCO-Funktionalität von mindestens 1,5 aufweisen und deren zahlenmittleren Molmassen zwischen 1000 und 10000 variieren, durch Umsetzung von
A) 40 bis 90 Gew.-% mindestens eines Polyisocyanats mit Uretdiongruppen,
und
B) 3 bis 30 Gew.-% mindestens einer Hydroxy- oder Mercaptocarbonsäure,
und
C) mindestens eine gegenüber Isocyanaten reaktive monofunktionelle Verbindung,
und/oder
D) mindestens ein aliphatisches und/oder cycloaliphatisches Polyol,
und/oder
E) mindestens ein weiteres funktionelle Gruppen enthaltendes Polyol,
und/oder
F) mindestens ein aliphatisches und/oder cycloaliphatisches Polyamin,
in einer Gesamtmenge C), D), E) und F) von 57 bis 3 Gew.-%, wobei das Mischungsverhältnis von C) zu D) zu E) zu F) frei wählbar ist und eine Komponente auch allein enthalten sein kann. Einen Gehalt an freien NCO-Gruppen von 0 bis 5 Gew.-% und eine NCO-Funktionalität von mindestens 1,5 aufweisen und die zahlenmittleren Molmassen zwischen 1000 und 10000 variieren, bei Temperaturen von 40 bis 200 °C.

16. Verfahren zur Herstellung der Polyadditionsverbindungen mit Uretdion- und Carboxylgruppen nach Anspruch 15,
**dadurch gekennzeichnet,**
**dass** die Umsetzung der Verbindungen A) bis F) in Lösung erfolgt und dieses nach erfolgter Reaktion entfernt wird.

17. Verfahren zur Herstellung der Polyadditionsverbindungen mit Uretdion- und Carboxylgruppen nach Anspruch 15,
**dadurch gekennzeichnet,**
**dass** die Umsetzung der Verbindungen A) bis F) Lösemittel frei und diskontinuierlich erfolgt.

18. Verfahren zur Herstellung der Polyadditionsverbindungen mit Uretdion- und Carboxylgruppen nach den Ansprüchen 15 bis 17,
**dadurch gekennzeichnet,**
**dass** zur Umsetzung der Verbindungen A) bis F) Katalysatoren in einer Konzentration von 0,01 bis 1 Gew.-%, bezogen auf die eingesetzten Rohstoffe, eingesetzt werden.

19. Verfahren zur Herstellung der Polyadditionsverbindungen mit Uretdion- und Carboxylgruppen nach den Ansprüchen 15 bis 18,
**dadurch gekennzeichnet,**
**dass** Verbindungen gemäß den Ansprüchen 2 bis 14 eingesetzt werden.

20. Verwendung der Uretdion- und Carboxylgruppen enthaltenden Polyadditionsverbindungen nach mindestens einem der Ansprüche 1 bis 14
zur Herstellung von Blockierungsmittel freien, transparenten oder pigmentierten Polyurethan-Pulverlacken.

21. Blockierungsmittel freie, transparente oder pigmentierte Polyurethan-Pulverlacke,
**dadurch gekennzeichnet,**
**dass** diese Uretdion- und Carboxylgruppen enthaltenden Polyadditionsprodukte nach mindestens einem der Ansprüche 1 bis 14, funktionelle Gruppen enthaltende Polymere und weitere Hilfs- und Zuschlagstoffe enthalten.

22. Blockierungsmittel freie, transparente oder pigmentierte Polyurethan-Pulverlacke,
**dadurch gekennzeichnet,**
**dass** diese Uretdion- und Carboxylgruppen enthaltenden Polyadditionsprodukte nach mindestens einem der Ansprüche 1 bis 14, funktionelle Gruppen enthaltende Polymere, Verbindungen, die mit Carboxylgruppen reagieren, und weitere Hilfs- und Zuschlagstoffe enthalten.

23. Blockierungsmittel freie, transparente oder pigmentierte Polyurethan-Pulverlacke nach den Ansprüchen 21 oder 22,
**dadurch gekennzeichnet,**
**dass** hydroxylgruppenhaltige Polymere enthalten sind.

24. Blockierungsmittel freie, transparente oder pigmentierte Polyurethan-Pulverlacke nach Anspruch 23,
**dadurch gekennzeichnet,**
**dass** das Verhältnis der Hydroxylgruppen des Polymeren zu den Isocyanatgruppen des Uretdion- und Carboxylgruppen enthaltenden Polyadditionsproduktes 1: 0,5 bis 1,2 beträgt.

25. Blockierungsmittel freie, transparente oder pigmentierte Polyurethan-Pulverlacke nach Anspruch 24,
**dadurch gekennzeichnet,**
**dass** das Verhältnis der Hydroxylgruppen des Polymeren zu den Isocyanatgruppen des Uretdion- und Carboxylgruppen enthaltenden Polyadditionsproduktes 1 : 0,8 bis 1,1 beträgt.

26. Blockierungsmittel freie, transparente oder pigmentierte Polyurethan-Pulverlacke nach Anspruch 25,
**dadurch gekennzeichnet,**
**dass** das Verhältnis der Hydroxylgruppen des Polymeren zu den Isocyanatgruppen des Uretdion- und Carboxylgruppen enthaltenden Polyadditionsproduktes 1 : 1 beträgt.

27. Blockierungsmittel freie, transparente oder pigmentierte Polyurethan-Pulverlacke nach mindestens einem der Ansprüche 21 bis 26,
**dadurch gekennzeichnet,**
**dass** hydroxylgruppenhaltige Polyester mit einer Funktionalität > 2, einer OH-Zahl von 20 bis 200 mg KOH/g, einer Viskosität bei 160 °C von < 60 000 mPa·s und einem Schmelzpunkt > 70 °C bis < 120 °C enthalten sind.

28. Blockierungsmittel freie, transparente oder pigmentierte Polyurethan-Pulverlacke nach Anspruch 23,
**dadurch gekennzeichnet,**
**dass** hydroxylgruppenhaltige Acrylate mit einer OH-Zahl von 25 - 150 mg KOH/g enthalten sind.

29. Blockierungsmittel freie, transparente oder pigmentierte Polyurethan-Pulverlacke nach den Ansprüchen 22 bis 28,
**dadurch gekennzeichnet,**
**dass** als Verbindung, die mit den Carboxylgruppen der Uretdion- und Carboxylgruppen enthaltenden Polyadditionsprodukte reagiert, Polyepoxide und/oder β-Hydroxyalkylamide eingesetzt werden.

30. Blockierungsmittel freie, transparente oder pigmentierte Polyurethan-Pulverlacke nach Anspruch 29,
**dadurch gekennzeichnet,**
**dass** die Polyepoxide ein 1,2-Epoxyäquivalentgewicht von größer als 1 aufweisen.

31. Blockierungsmittel freie, transparente oder pigmentierte Polyurethan-Pulverlacke nach den Ansprüchen 29 oder 30,
**dadurch gekennzeichnet,**
**dass** als Polyepoxide Polyglycidylether aromatischer, aliphatischer, cycloaliphatischer oder heterozyklischer Polyole eingesetzt werden.

32. Blockierungsmittel freie, transparente oder pigmentierte Polyurethan-Pulverlacke nach Anspruch 29,
**dadurch gekennzeichnet,**
**dass** als β-Hydroxyalkylamid VESTAGON EP-HA 320, PRIMID XL-552, PRIMID QM 1260, PRIMID SF 4510, PROSID H oder PROSID S eingesetzt werden.

33. Blockierungsmittel freie, transparente oder pigmentierte Polyurethan-Pulverlacke nach mindestens einem der Ansprüche 22 und 29 bis 31,
**dadurch gekennzeichnet,**
**dass** das Verhältnis der Epoxidgruppen des Polyepoxids zu den Carboxylgruppen des Uretdion- und Carboxylgruppen enthaltenden Polyadditionsproduktes 0,5 bis 1,6 zu 1 beträgt.

34. Blockierungsmittel freie, transparente oder pigmentierte Polyurethan-Pulverlacke nach mindestens einem der Ansprüche 22 und 29 bis 32,
**dadurch gekennzeichnet,**
**dass** das Verhältnis der Hydroxylgruppen des β-Hydroxyalkylamids zu den Carboxylgruppen des Uretdion- und Carboxylgruppen enthaltenden Polyadditionsproduktes 0,5 bis 1,6 zu 1 beträgt.

35. Blockierungsmittel freie, transparente oder pigmentierte Polyurethan-Pulverlacke nach mindestens einem der Ansprüche 21 bis 34,
**dadurch gekennzeichnet,**
**dass** den PUR-Pulverlacken Katalysatoren in einer Konzentration von 0 bis 5 Gew.-%, bezogen auf die gesamte Pulverlackmenge, zugesetzt werden.

36. Blockierungsmittel freie, transparente oder pigmentierte Polyurethan-Pulverlacke nach Anspruch 35,
**dadurch gekennzeichnet,**
**dass** den PUR-Pulverlacken organische Zinnverbindungen in einer Konzentration von 0 bis 5 Gew.-%, bezogen auf die gesamte Pulverlackmenge, zugesetzt werden.

37. Blockierungsmittel freie, transparente oder pigmentierte Polyurethan-Pulverlacke nach mindestens einem der Ansprüche 21 bis 36,
**dadurch gekennzeichnet,**
**dass** als weitere Hilfs- oder Zuschlagstoffe Weißpigmente, Farbpigmente, Metallpigmente, Effektpigmente, Bariumsulfat, Verlaufmittel, Entgasungsmittel, Thixotropiermittel und Stabilisatoren enthalten sind.

38. Verwendung von transparenten oder pigmentierten Polyurethan-Pulverlacken gemäß den Ansprüchen 21 bis 37 zur Herstellung von glänzenden Beschichtungen.

39. Verwendung von transparenten oder pigmentierten Polyurethan-Pulverlacken gemäß den Ansprüchen 21 bis 37 zur Herstellung von matten Beschichtungen.
